# EUROPÄISCHE PATENTSCHRIFT

(11) **EP 2 900 091 B1**
(45) Veröffentlichungstag und Bekanntmachung des Hinweises auf die Patenterteilung: **25.01.2017**
(21) Anmeldenummer: 13805765.8
(22) Anmeldetag: 24.09.2013
(51) Int. Cl.: A23L 2/70, C12H 1/02, C12C 11/11

(54) **KLÄRUNGSVERFAHREN**
CLARIFICATION METHOD
PROCÉDÉ DE CLARIFICATION

(30) Priorität: 25.09.2012 DE 102012019314
(43) Veröffentlichungstag der Anmeldung: 05.08.2015
(73) Patentinhaber: Technische Universität Berlin, 10623 Berlin (DE)
(72) Erfinder: METHNER, Frank-Jürgen, 54634 Bitburg (DE); KUNZ, Thomas, 10178 Berlin (DE); ENDREß , Hans-Ulrich, 75305 Neuenbürg (DE); KURZ, Thomas, 75173 Pforzheim (DE)
(74) Vertreter: Wacker, Jost Oliver
(86) Internationale Anmeldenummer: PCT/EP2013/002863
(87) Internationale Veröffentlichungsnummer: WO 2014/048558

(56) Entgegenhaltungen:
- WO-A1-98/00519
- WO-A2-2006/032088
- DE-C1- 3 614 656
- US-B1- 7 160 563
- ROGER A. MUSSCHE ET AL: "Total Stabilisation of Beer in a Single Operation*", JOURNAL OF THE INSTITUTE OF BREWING, Bd. 105, Nr. 6, 16. Mai 1999 (1999-05-16), Seiten 386-391, XP055095986, ISSN: 0046-9750, DOI: 10.1002/j.2050-0416.1999.tb00030.x

## Beschreibung

### Technischer Hintergrund

Die Erfindung betrifft ein Klärungsverfahren für eine Getränkeflüssigkeit, insbesondere zur Herstellung von Bier, Wein oder Säften, unter der Anwendung beziehungsweise dem Einsatz eines schnell wirkenden/komplexierenden Pektins. Bei dem Verfahren wird die Getränkeflüssigkeit nach dem Durchlaufen einer Gärungsstufe einer Klärung unterzogen, die zur Entfernung von Trübungsbestandteilen aus der Getränkeflüssigkeit dient. Dabei wird die Getränkeflüssigkeit mit wenigstens einem pektinhaltigen Klärungsmittel zur Erhöhung einer späteren Filtrationsleistung beaufschlagt. Ferner wird die Getränkeflüssigkeit einem Reifungsbeziehungsweise Lagertank zugeführt, in dem die Getränkeflüssigkeit über eine Reifungszeit hinweg gelagert wird. Als schnell wirkende/komplexierende Pektine können dabei, in Abhängigkeit von der vorhandenen Getränkematrix (Bier, Wein, Säfte, oder vergleichbare Getränke) insbesondere im Hinblick auf den Veresterungs- und Amidierungsgrad am besten geeignete Pektine, die unter dem Begriff Pectino-floc A, B, C und so weiter verwendet werden, zum Einsatz kommen.

Zu den wichtigsten Qualitätsmerkmalen von klaren Getränken (z.B. Bier, Wein, Säfte, etc.) gehören neben dem Geruch-, dem Geschmack-, der Farbe auch die Glanzfeinheit sowie die chemisch-physikalische Haltbarkeit, auch kolloidale Stabilität genannt. Um klare, brillante Biere bzw. Weine oder Säfte zu erhalten, müssen diese filtriert werden. Hierbei können Klärungsmittel eingesetzt werden, um die Filtrationsleistung zu erhöhen und die Produktionszeit von Getränken wie Bier, Wein, Fruchtsäften, etc. zu verkürzen.

Die filtrierten, glanzfeinen Biere, Weine und andere Getränke verlieren nach einiger Zeit ihren Glanz und nach entsprechender Lagerzeit kann eine unerwünschte Trübungsbildung beobachtet werden. Durch diese Trübungsbildung wird die Qualität der Getränke allgemein beeinträchtigt und die Haltbarkeit herabgesetzt. Die möglichen Ursachen für eine Trübungsbildung sind vielfältig und man unterscheidet grundsätzlich zwischen der biologischen und nicht-biologischen Stabilität. Bei der nicht-biologischen Stabilität, die auch als kolloidale oder chemisch-physikalische Stabilität bezeichnet wird, werden für die Trübungsbildung chemische und physikalische Reaktionen verantwortlich gemacht, während als Ursache für die biologische Stabilität der Einfluss von bierschädlichen Mikroorganismen gesehen wird. Darüber hinaus unterteilt man die nicht-biologische Trübung in die Kältetrübung, auch reversible Trübung genannt, und in eine Datrertrübung, die als irreversible Trübung bezeichnet wird.

Kältetrübungen entstehen bei Temperaturen zwischen -2 °C und +5 °C und lösen sich beim Erwärmen rückstandslos auf.

Im Gegensatz dazu klaren Biere oder Getränke, die irreversible Trübung enthalten, auch bei Raumtemperatur nicht mehr auf. Kältetrübung gilt als Vorläufer der irreversiblen Trübung und ist daher von besonderem Interesse, da durch eine Verminderung von Kältetrübung das Entstehen von irreversibler Trübung ebenfalls verringert bzw. unterbunden wird.

Im Hinblick auf die chemisch-physikalische Trübungsbildung in Bier und anderen Getränken sind insbesondere die Wechselwirkungen von trübungsaktiven Polyphenolen und Proteinen als maßgebend erkannt worden. Deshalb werden in der Getränkeindustrie Stabilisierungsmittel wie PVPP (Polyvinylpolypyrollidon), Bentonit und Silikagel eingesetzt, durch die trübungsaktive Polyphenole bzw. Proteine im Herstellungsprozess entfernt werden können. Jüngere Forschungsarbeiten haben zusätzlich aufgezeigt, dass insbesondere an der Ausbildung der reversiblen Kältetrübung bestimmte Metallionen maßgeblich beteiligt sind. Hierbei ist insbesondere auf die Temperatur- und pH-Wert abhängige Komplexbildung von Metallionen bestimmter Oxidationsstufe mit den vorliegenden Polyphenol-Proteinverbindungen hinzuweisen.

Im pH-Wert Bereich von Bier (pH 4,2-4,4) sind es insbesondere oxidierte Metallionen wie Fe3+ /Cu+ die nach dem Verbrauch des endogenen antioxidativen Potentials über oxidative Prozesse unter Beteiligung des sogenannten Fenton-/Haber-Weissreaktionssytem entstehen und mit den vorliegenden Polyphenol-Proteinverbindungen sichtbare, Temperatur- und pH-Wert abhängige Komplexverbindungen hervorrufen.

Neben dem in DE 3614656 C1 beschriebenen klärenden Effekt von Pektinsäure, welcher in der Vergangenheit auch vereinzelt zur Schönung von Wein eingesetzt wurde, ist der Patentschrift WO 2006/032088 A2 der Einsatz von Pektin als Stabilisierungsmittel im Brauprozess beschrieben. In diesem Zusammenhang wird neben dem klärenden Effekt von Pektin insbesondere der stabilisierende Effekt auf die kolloidale Haltbarkeit von Bieren hervorgehoben. Zur Erklärung des Stabilisierungseffekts und der entsprechenden Steigerung der kolloidalen Haltbarkeit sind verschiedene vorstellbare Mechanismen unter Ausbildung von Netzwerken zwischen Pektin und Ca2+, Mg2+ -Ionen vorgestellt und beschrieben. In den gebildeten Netzwerken sollen die trübungsaktiven Polyphenole, Proteine und Kohlenhydrate eingelagert werden und durch Sedimentation bzw. spätestens bei der Filtration entfernt werden.

Gemäß Patentanmeldung WO 2006/032088 A2 erzielt das eingesetzte Pektin einen signifikanten kolloidalen Stabilisierungseffekt, wenn es in einer wässrigen Lösung aus Natriumcitrat, Zitronensäure und Kaliummetabisulfit zum unfiltrierten Bier während der Reifung hinzugegeben wird.

Im Gegensatz zu PVPP und Silikagel konnte dagegen im Rahmen von Forschungsarbeiten kein signifikanter und direkt vom Pektin hervorgerufener Stabilisierungseffekt auf die kolloidale Bierstabilität nachgewiesen werden. Dies gilt insbesondere wenn das Pektin einfach in wässriger Lösung bzw: Pufferlösung gelöst (d.h. ohne Natriumcitrat, Zitronensäure und Kaliummetabisulfit) dem Unfiltrat entsprechend der Lehre aus WO 2006/032088 A2 bei der Reifung zugegeben wird. Insgesamt wiesen alle Ergebnisse vielmehr darauf hin, dass die in diesem Stand der Technik beschriebene verzögerte Trübungsausbildung und die damit verbundene höhere kolloidale Bierstabilität nicht durch das Pektin als solches verursacht wird, sondern auf der indirekten SO2- und Zitronensäurezugabe mittels der vorgegebenen Pektinlösung unter Verwendung von Kaliummetabisulfit bzw. Natriumcitrat / Zitronensäure beruht.

WO 98/00519 A1 beschreibt eine spezielle pektinhaltige Zusammensetzung, die bei der Bierherstellung als Klärungsmittel dienen kann und dabei ohne Abtrennschritt eingesetzt wird.

Der Artikel "Total Stabilisation of Beer in a Single Operation" von Mussche et al., J. Inst. Brewing, Bd. 105/Nr. 6, 16 Mai 1999, Seiten 38 - 391 beschreibt die Verwendung von Gallotannin in Verbindung mit Polyphenl-Absorbern zur Klärung von Bier. Diese werden in einen Bierstrom eingegeben und später mittels Zentrifuge wieder aus diesem abgetrennt.

In Deutschland ist die direkte Zugabe von Schwefeldioxid bei Bieren, die nach dem Deutschen Reinheitsgebot gebraut werden, nicht zulässig. Schwefeldioxid stellt im Bier und anderen Getränken eine entscheidende Antioxidanz da, durch deren Zugabe die oxidative Bier-(Getränke-)Stabilität gesteigert werden kann. Die gegenüber der Lagerzeit in Bieren auftretende Trübungsbildung steht im direkten Zusammenhang zu oxidativen Prozessen und der oxidativen Bierstabilität. Der Zusammenhang zwischen der oxidativen und der kolloidalen Bierstabilität ist schon seit langem bekannt und wurde in jüngerer Zeit durch entsprechende Forschungsarbeiten unter Einbeziehung des endogenen antioxidativen Potentials von Bieren (Getränken) verifiziert. Auf Basis der beschriebenen Zusammenhänge wird die im Stand der Technik beschriebene kolloidale Bierstabilisierung nicht durch das eingesetzte Pektin, sondern durch die SO2- und Zitronensäurezugabe hervorgerufen. Auf diesem Wege können die an der Trübungsbildung beteiligten Bierinhaltsstoffe (z.B. Metallionen) komplexiert (z.B. Zitronensäure) und die durch Oxidation hervorgerufene Trübungsbildung verzögert werden (hauptsächlich SO2-zugabe).

Gegenüber dem Negativnachweis als Stabilisierungsmittel war der klärende Effekt. des Pektins im Herstellungsprozess unabhängig vom SO2-Gehalt in allen Forschungsarbeiten eindeutig nachweisbar. In entsprechenden Laborversuchen war es mit verschiedenen Pektintypen möglich im Verlauf der Bierreifung eine gute Klärwirkung zu erzielen und die Filtrationszeiten herabzusetzen bzw. die Filtrationsleistung signifikant zu erhöhen.

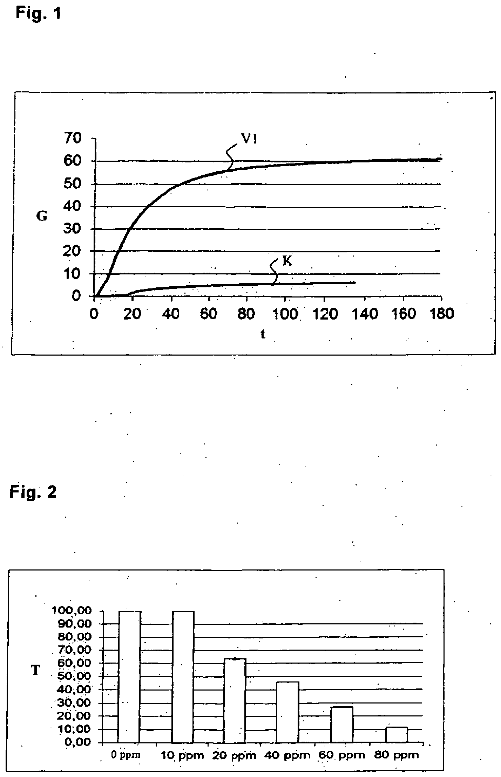

Figur 1 zeigt einen Filtrationsverlauf V1 nach Klärung durch Anwendung von 80 ppm Pektin B sowie einen Kontrollverlauf K bei fehlender Anwendung von Pektin. Die Verläufe zeigen jeweils das Gewicht G in Gramm des zurückgehaltenen Materials über die Zeit t in Sekunden. Die Filtration erfolgt dabei bei 0,5 bar, 0°C und 0,45 µm.

Im größeren Produktionsmaßstab traten jedoch, im Gegensatz zu den im Stand der Technik beschriebenen Gegebenheiten, große Schwierigkeiten in der Handhabung auf. Die Sedimentation eines im Stand der Technik beschriebenen Pektinflocks konnte aufgrund der vorliegenden Strömungsverhältnisse im Verlauf der Bierreifung nicht bzw. nur ganz selten im Ansatz erreicht werden. Dies liegt vor allem in den vorliegenden Strömungsverhältnissen und den sehr leichten Pektinagglomeraten (Pektinflocken) begründet die durch leichteste Erschütterung bzw. Strömungen in Schwebe gehalten werden. Auf dieser Basis ist es schwierig ein im oberen Reifungstankbereich stärker geklärtes Bier für eine beschleunigte Filtration abzuziehen und ohne entsprechende Bienrerluste zu filtrieren.

Zusätzliche Filtrationsversuche haben aufgezeigt, dass die in Schwebe gehaltenen Pektinagglomerate nur bedingt bis gar nicht geeignet sind um die Filtration nach der Reifung zu beschleunigen. Dies liegt voraussichtlich darin begründet, dass das von dem Pektin ausgebildete Netzwerk bei beschriebener Vorgehensweise über die Zeit im Reifungs- beziehungsweise Lagertank hinweg wieder in Lösung geht oder aufbricht und das zum Teil gelöste Pektin die Filtrationsleistung herabsetz.

Die im Stand der Technik beschriebene Vorgehensweise ist auch nur bedingt geeignet um Pektin einfach in der Handhabung und vor allem wirtschaftlich als Klärungsmittel bei der Bierherstellung einzusetzen, d.h. Pektin ist als Stabilisierungsmittel nicht geeignet und bei gegebener Vorgehensweise nur bedingt als Klärungsmittel im Brauprozess geeignet.

Abgesehen hiervon werden seit einigen Jahren Gallotannine in der Brauindustrie zur kolloidalen Stabilisierung und zur Vermeidung des sogenannten Gushingeffekts bei Getränken eingesetzt (Gushing: spontanes Überschäumen von Getränken nach der Flaschenöffnung). Das Funktionsprinzip beruht hierbei auf der Gegebenheit, dass die eingesetzten Gallotannine an die vorhandenen Trübungs- bzw. Gushingaktiven Proteinfraktionen binden und in Folge die gebildeten Ausfällungen abgetrennt werden können (z.B. Filtration). Beim Einsatz der Gallotannine zur Reduzierung des Gushingpotentials von Getränken wird zusätzlich ausgenutzt, dass in den gebildeten Gallotannin-Proteinverbindungen gushingaktive und prooxidativ wirkende Metallionen - insbesondere Fe - komplexgebunden vorliegen und mit den gebildeten Ausfällungen entfernt werden können.

### Aufgabe/ Erfindung

Vor diesem Hintergrund war es Aufgabe der Erfindung, die Anwendung von Pektin als Stabilisierungsmittel im Brauprozess zu verbessern und insbesondere den Mechanismus der Flockulierung und die Einflüsse auf die Klärung zu optimieren.

Diese Aufgabe wird durch ein Klärungsverfahren mit den Merkmalen des Anspruchs 1 gelöst. Dabei wird das pektinhaltige Klärungsmittel auf dem Weg von der Gärungsstufe zum Reifungsbehälter in die Getränkeflüssigkeit eingebracht, das heißt entweder, insbesondere am Ende des Gärungsprozesses, in einen Gärungs- oder Zwischentank der Gärungsstufe oder aber in eine Verbindungsleitung zwischen dem Gärungstank und dem Reifungsbehälter. In jedem Fall wird das in dem eingebrachten pektinhaltigen Klärungsmittel enthaltene Pektin dabei noch vor der Zuführung zum Reifungsbehälter zumindest größtenteils, das heißt mit einem Anteil von über 50% der zuvor eingebrachten Menge, vorzugsweise mit einem Anteil von mindestens 70% und idealerweise mit einem Anteil von über 90 % der zuvor eingebrachten Menge, wieder aus der Getränkeflüssigkeit entfernt. Hierdurch ergibt sich eine Vielzahl von neuen Möglichkeiten, um bestimmte Pektine als Klärungsmittel bei der Getränkeherstellung und insbesondere im Brauprozess einzusetzen, deren Einsatz zu optimieren und bei bestimmten Prozessschritten oder Anlagen erst möglich zu machen. Dabei ist es durch eine gezielt dosierte Pektinzugabe möglich, mit einer sehr geringen Kontaktzeit eine ausreichende Klärung der Getränkeflüssigkeit zu erzielen und die Filtrationsleistung signifikant zu erhöhen. Hierbei wird der schnelle Klärungseffekt des Pektins genutzt, um auf dem Weg der Getränkeflüssigkeit von der Gärungsstufe zum Reifungsbehälter die durch die Beaufschlagung gebildeten Pektinflocken auszubilden und wieder zu entfernen.

Hierbei ist es besonders vorteilhaft, wenn die Getränkeflüssigkeit in einem zusätzlichen Verfahrensschritt mit Gallotanninen beaufschlagt wird. Hierdurch kann die durch das pektinhaltige Klärungsmittel hervorgerufene Klärwirkung auch bei schlecht zu klärenden Getränke- oder Biermatrices signifikant erhöht werden. Durch den Einsatz von Gallotanninen werden Gallotannin-Proteinverbindungen gebildet, die gegenüber den alleinigen Proteinfraktionen mit einer größeren Partikelgröße ind der Getränke-/Biermatrix vorliegen. Auf diese Weise kann die Klärung mittels pektinhaltiger Klärungsmittel auf besonders viele Anwendungsbereiche ausgeweitet werden beziehungsweise die Klärwirkung des erfindungsgemäßen Klärverfahrens weiter erhöht werden. Zudem wird hierdurch die spätere Filtrationsleistung verbessert.

Dabei ist es besonders günstig, wenn die Beaufschlagung der Getränkeflüssigkeit mit den Gallotanninen vor der Beaufschlagung der Getränkeflüssigkeit mit dem pektinhaltigen Klärungsmittel erfolgt. Hierdurch können die größeren und besser einzulagernden Partikel der Gallotannin-Proteinverbindungen noch vor Entstehung des Pektinnetzwerkes ausgebildet werden.

Hierbei ist es vorteilhaft, wenn die Beaufschlagung der Getränkeflüssigkeit mit den Gallotanninen mindestens eine Minute vor der Beaufschlagung mit dem pektinhaltigen Klärungsmittel erfolgt. Hierdurch können sich die Gallotannin-Proteinverbindungen besonders gut in das durch die anschließende Eingabe des pektinhaltigen Klärungsmittels entstehende Pektinnetzwerk einlagern.

In einer besonders vorteilhaften Ausführungsform erfolgt zwischen der Beaufschlagung der Getränkeflüssigkeit mit dem pektinhaltigen Klärungsmittel und der Zuführung zum Reifungsbehälter in einem weiteren Verfahrensschritt eine Vorklärung der Getränkeflüssigkeit. Auf diese Weise kann beispielsweise eine Vorrichtung zum Abtrennen von Hefen vor der Bierreifung gleichzeitig dazu benutzt werden, um die Pektinflocken zu entfernen.

Dabei ist es günstig, wenn die Vorklärung mittels eines Separators zur Abtrennung von Hefen vor der Bierreifung erfolgt, wodurch das in die Getränkeflüssigkeit eingebrachte pektinhaltige Klärungsmittel beziehungsweise die daraus entstandenen Pektinflocken wieder nahezu vollständig aus der der Getränkeflüssigkeit entfernt werden können.

Vorteilhafterweise ist zwischen der Beaufschlagung der Getränkeflüssigkeit mit dem pektinhaltigen Klärungsmittel und der Vorklärung, bei der das pektinhaltige Klärungsmittel beziehungsweise die daraus entstandenen Pektinflocken wieder aus der Getränkeflüssigkeit entfernt werden, eine Kontaktzeit des pektinhaltigen Klärungsmittels mit der Getränkeflüssigkeit vorgesehen, die beispielsweise auch bei Zugabe des pektinhaltigen Klärungsmittels bereits in den Gärtank oder einen Zwischentank der Gärstufe weniger als 24 Stunden beträgt. Je nach Anlage kann die Kontaktzeit jedoch auch weniger als 1 Stunde und bevorzugterweise weniger als 10 min betragen, beispielsweise wenn das pektinhaltige Klärungsmittel erst im Anschluss an die Gärungsstufe in eine Verbindungsleitung zwischen Gärungsstufe und Reifungsbehälter in die Getränkeflüssigkiet gegeben wird. Durch diese kurzen und unterschiedlichen Kontaktzeiten kann das Klärungsverfahren an besonders vielen Anlagen umgesetzt werden und dabei an jede Anlage individuell angepasst werden.

Zudem ist es günstig, wenn in einem der Lagerung der Getränkeflüssigkeit im Reifungsbehälter nachfolgenden weiteren Verfahrensschritt eine Filtration der Getränkeflüssigkeit erfolgt. Hierdurch kann die Klärung weiter verbessert werden, wobei die der Reifungsstufe vorgeschaltete Vorklärung unter Beigabe von Pektin zu einer erheblich verbesserten Filtrationsleistung nach der Reifung führt.

Vorteilhafterweise wird bei der Filtration die betreffende Getränkeflüssigkeit aus einem oberen Drittel des Reifungsbehälters beziehungsweise aus einem oberen Drittel des gefüllten Reifungsbehältervolumens entnommen und einem Membran/Kieselgur-Filter zugeführt, wodurch ein besonders hoher Klärungsgrad der gefilterten Getränkeflüssigkeit gewährleistet werden kann.

Ferner ist es günstig, wenn das pektinhaltige Klärungsmittel eine Pektinmenge enthält, die 1 bis 200 ppm, bevorzugsweise 20-100 ppm und insbesondere 30 bis 80 ppm bezogen auf die zu beaufschlagende Menge der Getränkeflüssigkeit beträgt. Hierdurch ist bei relativ geringem Kostenaufwand für das als Klärungsmittel verwendete Pektinn eine ausreichend hohe Klärung möglich.

In einer weiteren vorteilhaften Ausführungsform ist das pektinhaltige Klärungsmittel durch eine wässrige Lösung gebildet, wodurch eine schnelle und relativ gleichmäßige Verteilung des Pektins bei der Beaufschlagung der Getränkeflüssigkeit gewährleistet werden kann.

Dabei ist es günstig, wenn die wässrige Lösung wenigstens ein Puffermittel enthält.

In einer weiteren vorteilhaften Ausführungsform enthält das pektinhaltige Klärungsmittel ein Pektin, das aus der Gruppe von Pectino-floc / A, B, C entnommen ist, wodurch insbesondere innerhalb eines Bierbrauprozesses eine besonders gute Klärung erzielt werden kann.

Ferner ist es günstig, wenn in einem der Beaufschlagung der Getränkeflüssigkeit mit dem pektinhaltigen Klärungsmittel vorausgehenden Verfahrensschritt ein Schnellverfahren zur Bestimmung eines für die jeweils zu beaufschlagende Getränkeflüssigkeit maximal geeigneten Pektins aus einer Gruppe von mehreren in Frage kommenden Pektinen für die Herstellung des pektinhaltigen Klärungsmittels durchgeführt wird. Hierdurch kann innerhalb kurzer Zeit für eine jeweilige Getränkematrix das Pektin aus einer Gruppe von mehreren vorgegebenen Pektinen ermittelt werden, mit dem das beste Klärungsergebnis erzielt werden kann.

Vorteilhafterweise wird bei dem Schnellverfahren dabei jedes der in Frage kommenden Pektine jeweils in eine vorgegebene Menge der vorliegenden, zu beaufschlagenden Getränkeflüssigkeit gegeben und mit dieser zentrifugiert, wobei in einem nachfolgenden Verfahrensschritt, unter Einstellung eines für den betreffenden Produktionsschritt relevanten Temperaturbereich, eine jeweilige Trübungsmessung der Getränkeflüssigkeit vorgenommen wird. Auf dieses Weise kann das am besten geeignetste Pektin besonders schnell und zuverlässig ermittelt werden.

### Beschreibung einer Ausführungsform der Erfindung

Weitere Forschungsarbeiten haben aufgezeigt, dass die Pektinzugabe in einer wässrigen Lösung bzw. Pufferlösung während der Gärung bzw. besser vor Ende der Gärung (innerhalb der letzten 24 h) eine mögliche Alternative in der Vorgehensweise bzw. Handhabung als Klärungsmittel darstellt.

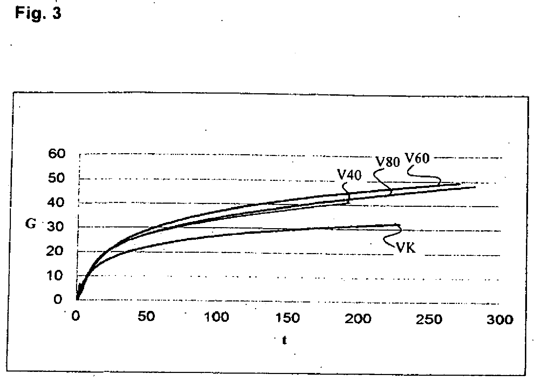

Zum Ende der Gärung wird beim Arbeitsschritt "Schlauchen" in vielen Brauereien eine Zentrifuge verwendet um Hefen vor der Bierreifung abzutrennen. Dieser Prozessschritt kann gleichzeitig genutzt werden um die gebildeten Pektinflocken zu einem hohen Anteil abzutrennen und eine entsprechende Vorklärung des Bieres zu erhalten. Durch die Vorklärung kann nach der Reifung eine signifikant gesteigerte Filtrationsleistung erzielt werden. Bei entsprechenden Versuchsreihen (Versuchssuden) konnte nach der Reifung eine um 25-40 % verbesserte Filtrationsleistung (Membran-/Kieselgur Filtration) bei den Pektin geklärten Bieren aufgezeigt werden (Abb. 2,3).

Figur 2 zeigt hierbei den Einfluss der neuen alternativen Zugabe von Pektinlösung B auf die Trübung (in EBC H90) T bzw. Klärung am Ende der Gärung und anschließender Zentrifugation (Seperator) in verschiedenen Konzentrationen bei 12°C, einer Menge von 3000g und einer Zentrifugationsdauer von einer Minute.

Figur 3 zeigt die Steigerung der Filtrationsleistung bei Oberflächenfiltration mittels eines 0,45 µm Membranfilters bei 0°C, 0,5 bar und einer Menge von 100ml aufgrund der neuen Vorgehensweise bei Eingabe von Pektinlösung B am Ende der Gärung und anschließende Zentrifugation ("Seperator"). Die Verläufe V40, V60, V80 und VK zeigen jeweils das Gewicht G in Gramm des zurückgehaltenen Materials über die Zeit t in Sekunden bei einer Konzentration der Pektinlösung von 40 ppm, 60 ppm, 80 ppm beziehungsweise bei einer Kontrollfilterung ohne Verwendung einer Pektinlösung.

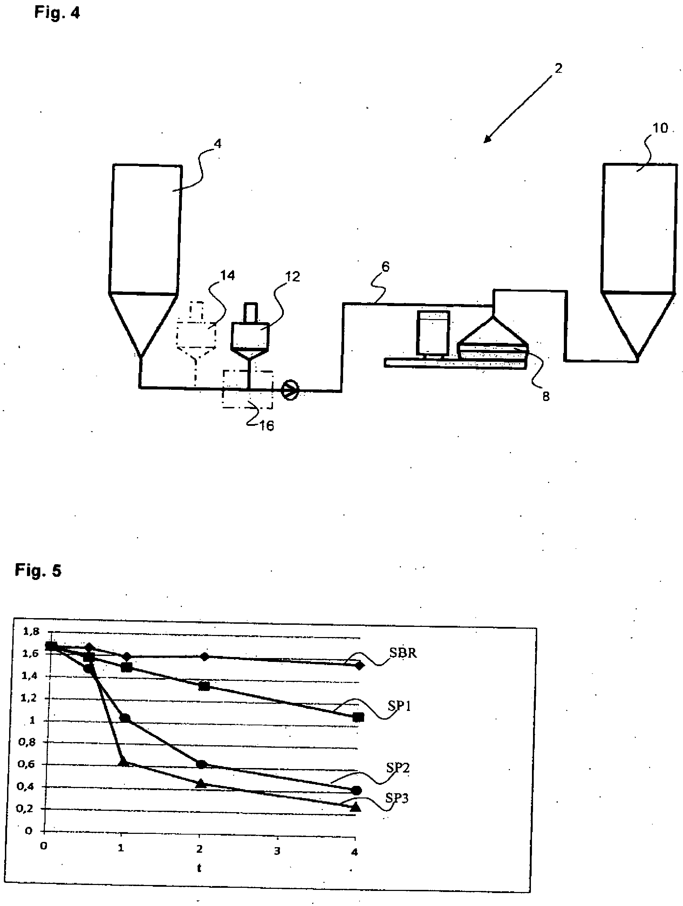

In der Figur 4 ist eine Anlage zur Durchführung des erfindungsgemäßen Klärungsverfahrens dargestellt.

Fig. 4 zeigt beispielhaft einen Anlagenteil 2 einer Brauerei- oder Getränkeherstellungsanlage. Diese weist einen Gärungstank 4 auf, der über eine Verbindungsleitung 6 mit einem Separator 8 und mit einem Reifungstank 10 verbunden ist. Zwischen dem Gärungstank 4 und dem Separator 8 ist dabei zusätzlich ein Dosiergerät 12 vorgesehen, mittels dem ein pektinhaltiges Klärungsmittel in die Verbindungsleitung abgegeben werden kann, das die darin transportierte Getränkeflüssigkeit beaufschlagt. Ferner kann zwischen dem Gärungstank 4 und dem Dosiergerät 12 ein weiteres Dosiergerät 14 vorgesehen sein, mittels dem die Getränkeflüssigkeit vor der Beaufschlagung mit dem pektinhaltigen Klärungsmittel zusätzlich mit Gallotanninen beaufschlagt werden kann.

Die Klärungsaktivität des Pektins basiert dabei im Wesentlichen auf der Interaktion mit Ca2+-Ionen in den Getränken. Pektin bildet mit Ca2+-Ionen ein Netzwerk aus, welches Trübungspartikel wie Protein-Polyphenol Komplexe und Hefezellen bindet.

Die Klärungseffektivität ist nachweislich abhängig vom Veresterungs- bzw. Amidierungsgrad und der Konzentration des Pektins sowie dem Verhältnis freier Ca2+-Ionen (Mg2+- spielt eine untergeordnete Rolle) zur hinzu gegebenen Pektinmenge.

Dem entsprechend und durch zusätzliche Effekte wie pH-Wert, Temperaturbereich etc. wird die Pektinflockenbildung und der Klärungseffekt in verschiedenen Getränken bzw. verschiedenen Bieren durch die vorliegende Matrix unterschiedlich beeinflusst. Zu hohe Konzentrationen an Ca2+-Ionen führen zur Gelierung des Pektins und der Klärungseffekt bleibt aus.

Um die bestmögliche Klärung bei der Getränkeherstellung zu erreichen ist die Art des Pektins (d.h. im Bereich bestimmter Veresterungs- bzw. Amidierungsgrade) bewusst zu wählen z.B. (Pectino-floc /A,B,C, etc.) und die Menge der Pektinzugabe an die Getränkematrix (Biermatrix) anzupassen.

Hierzu wurde ein analytisches Schnellverfahren entwickelt und angewendet, mit dem es möglich ist, innerhalb sehr kurzer Zeit das optimale Pektin für die gegebene Getränkematrix zu ermitteln. Der Vorteil des analytischen Schnellverfahrens gegenüber Sedimentationsversuchen ist die direkte Praxisnähe, der kurze Zeitaufwand und die Vermeidung von langen Umrechnungsfunktionen um das Verhalten in der Getränkematrix genauer zu beschreiben (s. Fig. 5, 6, 7). Für bestimmte Bereiche gibt es am besten geeignete Pektine (Pectino-floc/A, B, C) die gleichzeitig für viele Getränke bzw. Biere verwendet werden können.

Fig. 5 zeigt die Ergebnisse von Sedimentationsversuchen S unter Anwendung verschieder veresterter/amidierter Pektine P1, P2, P3 und einem unfiltrierten Referenzbier BR über die Zeit t in Stunden.

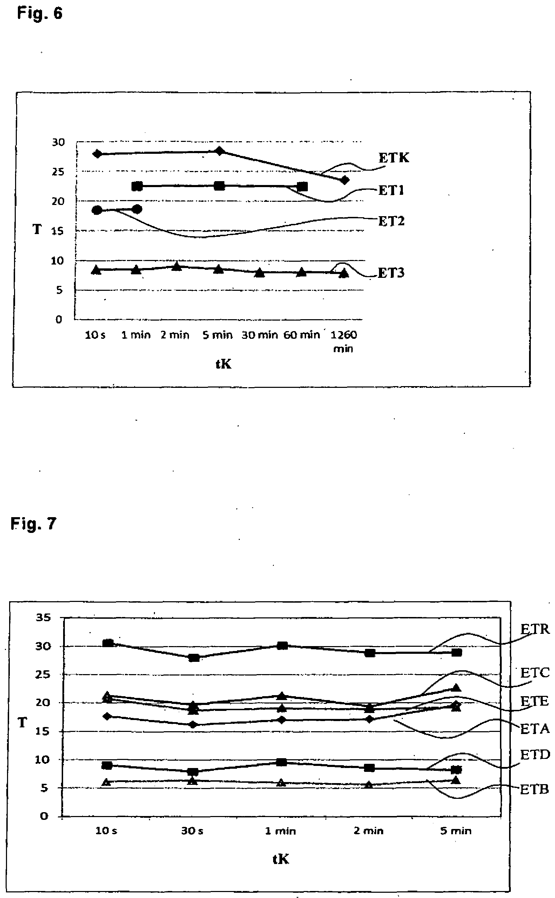

Fig. 6 zeigt die Ergebnisse des neuen Pektin-Eignungstests zur Bestimmung bzw. Festlegung des am besten geeigneten Pektins bei vorgegebener Getränkematrix / Biermatrix. Die Verläufe ET1, ET2, ET3 und ETK zeigen die Trübung T in EBC (90°) über die Pektinkontaktzeit tK für die Pektine AU 701 (VE:38), CU-L (DE:32/DA:18), AU-L (DE:30/DA:19) und einen Kontrolleignungstest, der ohne die Zugabe eines Pektins erfolgt.

Fig. 7 zeigt die Ergebnisse des neuen Pektin-Eignungstests zur Bestimmung bzw. Festlegung des am besten geeigneten Pektins bei vorgegebener Getränke- / Biermatrix für ein typisches Anwendungsbeispiel des Schnelltests in einer vorgegebenen Getränkematrix. Die Verläufe ETA, ETB, ETC, ETD, ETE und ETR zeigen die Trübung T in EBC (90°C) über die Pektinkontaktzeit tK für die Pektine A (Z), B (A), C (A), D (A) und einen Refernezeignungstest, der ohne die Zugabe eines Pektins erfolgt.

Weitere im Rahmen der Forschungsarbeiten gewonnene Erkenntnisse im Hinblick auf die Reaktionskinetik von bestimmten Pektinen machen es möglich die Anwendung der Pektine als Klärungsmittel in Getränken bei geringem Kostenaufwand weitergehend zu optimieren. Auf Basis vorliegender Ergebnisse bzw. Erkenntnisse ist es mit einer gezielt dosierten Pektinzugabe im Brauprozess bzw. bei der Getränkeherstellung möglich, mit einer sehr geringen Kontaktzeit von unter einer Stunde, vorzugsweise auch unter einer Minute und sogar unter einer Kontaktzeit von 30 Sekunden, 20 Sekunden oder 10 Sekunden einen ausreichende Klärung zu erzielen und die Filtrationsleistungen signifikant zu erhöhen. Aus dieser Erkenntnis heraus ergeben sich eine Vielzahl von neuen Möglichkeiten um bestimmte Pektine als Klärungsmittel bei der Getränkeherstellung und insbesondere im Brauprozess einzusetzen, deren Einsatz zu optimieren und bei bestimmten Prozessschritten erst möglich zu machen.

In dem in Fig. 4 gezeigten speziellen Beispiel wird beim Brauprozess das für die Biermatrix am besten geeignete Pektin (Pectino-floc /A,B,C, etc.) z.B. am Ende der Gärung (z.B. Gärtank) zugesetzt bzw. in einer speziellen Anwendung auf dem Weg des Bieres vom Gärtank 4 zum Seperator 8 in die Zuleitung injiziert und der schnelle Klärungseffekt genutzt um die gebildeten Pektinflocken direkt im Anschluss im Seperator 8 zu entfernen. Dabei kann, wie durch strichpunktierte Linie dargestellt, an der Verbindungsleitung 6 ein Zwischentank 16 vorgesehen werden, in dem bereits vor dem Separator 8 zusätzlich eine teilweise Abtrennung von Pektinflocken erfolgen kann. Das pektinhaltige Klärungsmittel kann je nach Strömungsbedingungen hierzu vor dem Zwischentank 16 in die Verbindungsleitung 6 oder, wie dargestellt, in den Zwischentank 16 selbst injiziert werden.

In jedem Falle führt die Vorklärung bei sehr geringem Kostenaufwand zu einer signifikanten Verbesserung der Filtrationsleistung bzw. Herabsetzung der Filtrationskosten. Die Pektinreste im Nachlauf des Seperators gelangen in den Reifungstank 10 und werden spätestens während der Filtration entfernt.

Im Endprodukt war Galacturonsäure nicht nachweisbar (IC), was darauf hindeutet, dass das Pektin spätestens durch die Filtration vollständig entfernt wird.

Weitere Untersuchungen haben aufgezeigt, dass die beschriebene Klärwirkung der Pektine durch den kombinierten Einsatz mit Gallotanninen auch bei einer schlecht zu klärenden Getränke- bzw. Biermatrices signifikant gesteigert werden kann. In der praktischen Anwendung ist der kombinierte Einsatz von Pektin und Gallotanninen sinnvoll sobald die Klärwirkung durch den alleinigen Einsatz von Pektin keine ausreichende Wirkung erzielt bzw. die Filtrationsleistung weiter gesteigert werden soll.

Über diesen innovativen Ansatz ist es zusätzlich möglich, die kolloidale und oxidative Getränkestabilität der produzierten Getränke signifikant zu verbessern. Desweiteren kann über diesen Weg ein eventuell vorhandenes Gushing-potential (plötzliches Überschäumen) reduziert werden. Dies wird dadurch erreicht, dass sich die eingesetzten Gallotannine an trübungsaktive beziehungsweise gushingaktive Proteinverbindungen anbinden. Die erzeugten Trübpartikel sind bei entsprechender Getränkematrix gut beziehungsweise besser geeignet, um in das durch ds Pektin ausgebildete Netzwerk eingelagert zu werden.

In Folge kann über diesen Weg die Klärung bei entsprechender Getränkematrix signifikant verbessert werden. Des Weiteren werden über diesen Weg der optimierten Klärung zusätzlich die in entsprechenden Komplexverbindungen eingelagerten, prooxidativ und gushingaktiv wirkenden Metallionen (insbesondere Eisen- und Kupferionen) aus der Getränkematrix entfernt. In Folge wird eine höhere oxidative Getränkestabilität erreicht und das Gushingpotential herabgesetzt.

Bei der vorliegenden Erfindung zur Optimierung der Klärung von Getränke- bzw. Biermatrices durch den kombinierten Pektin- / Gallotannineinsatz wird die nachgewiesene Gegebenheit genutzt, dass die durch die über das zweite Dosiergerät 14 in die Getränkeflüssigkeit eingebrachten Gallotannine ausgebildeten Gallotannin-Proteinverbindungen gegenüber den alleinigen Proteinfraktion mit einer größeren Partikelgröße in der Getränke-/ Biermatrix vorliegen und besonders gut in das durch den Pektineinsatz entstehende Pektinnetzwerk eingelagert werden.

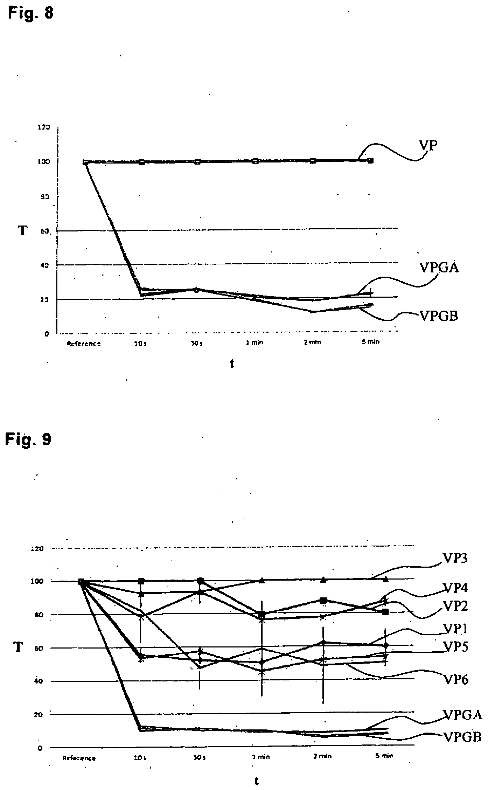

In Fig. 8 und 9 ist die signifikant gesteigerte Klärwirkung und das Funktionsprinzip des kombinierten Pektin- / Gallotannineinsatzes anhand einer schlecht zu klärenden Biermatrix mittels des zuvor beschriebenen Pektinschnelltests dargestellt.

Fig. 8 zeigt eine Pektin-Eignungstest H90 Streuung der kleinen Partikeln 1 µm beziehungsweise den Verlauf VP der Trübung T in EBC (H90) über die Zeit t für verschiedene Pektine in einer schlecht klärbaren Getränkematrix im direkten Vergleich mit den Verläufen VPGA und VPGB für zwei kombinierte Pektin-/Gallotannineinsätze.

Fig.9 zeigt eine H25 Streuung der gröberen Partikel > 1 µm beziehungsweise den jeweiligen Verlauf VP der Trübung T in EBC (H25) über die Zeit t für verschiedener Pektine 1 bis 6 in einer schlecht klärbaren Getränkematrix im direkten Vergleich mit den Verläufen VPGA und VPGB für zwei kombinierte Pektin-/Gallotannineinsätze.

Bei dem kombinierten Pektin- /Gallotannineinsatz ist darauf zu achten, dass die Gallotannine vor den Pektinen eingesetzt werden, so dass die größeren und besser einzulagernden Partikel der Gallotannin-Proteinverbindungen noch vor Entstehung des Pektinnetzwerks ausgebildet werden. D.h. die Gallotannine bzw. Gallotanninlösungen müssen bei der Getränkeherstellung bzw. im Brauprozeß vor bzw. kurz vor den Pektinen bzw. Pektinlösung zugegeben werden.

Zusätzliche Versuchsreihen haben aufgezeigt, dass eine zeitverzögerte Pektinzugabe von >/= 1 Minute nach Gallotanninzugabe ausreicht um die Klärwirkung signifikant zu steigern.

Der geleichzeitige Einsatz ist nur möglich wenn die Netzwerkausbildung der Pektine in der Getränkematrix durch technologische Maßnahmen und entsprechende Pektinauswahl (optimaler Veresterungs- bzw. Amidierungsgrad) verzögert wird.

Beim kombinierten Pektin-/Gallotannineinsatz hängt die notwendige Gallotanninmenge u.a. vom jeweils eingesetzten Gallotanninprodukt ab und kann ebenfalls über einen entsprechenden Schnelltest ermittelt werden.

Die Pektinzugabe liegt in allen beschriebenen neuen Applikationen zwischen 1-200 ppm besser 20-100 ppm, noch besser 30 - 80 ppm (z.B. 2,5 % (0,1 - 15 %) gelöst in Wasser oder Pufferlösung z.B. Acetatpuffer). Eine weitere Prozessoptimierung vorausgesetzt scheint die gezielte Anwendung von bestimmten Pektinen als Klärungsmittel in der Getränkeindustrie bzw. Brauindustrie durchaus eine kostengünstige Alternative zu den schon am Markt etablierten Produkten zu sein.

## Patentansprüche

1. Klärungsverfahren für eine Getränkeflüssigkeit, insbesondere zur Herstellung von Bier,
bei dem die Getränkeflüssigkeit nach dem Durchlaufen einer Gärungsstufe einer Klärung unterzogen wird, die zur Entfernung trübungsaktiver Bestandteile aus der Getränkeflüssigkeit dient, wobei die Getränkeflüssigkeit mit wenigstens einem pektinhaltigen Klärungsmittel zur Erhöhung einer Filtrationsleistung beaufschlagt wird, und
die Getränkeflüssigkeit einem Reifungsbehälter zugeführt wird, in dem die Getränkeflüssigkeit über eine Reifungszeit hinweg gelagert wird,
**dadurch gekennzeichnet, dass** das pektinhaltige Klärungsmittel auf dem Weg von der Gärungsstufe zum Reifungsbehälter in die Getränkeflüssigkeit eingebracht wird, wobei die Getränkeflüssigkeit in einem zusätzlichen Verfahrensschritt mit Gallotanninen beaufschlagt wird,
und das in der Getränkeflüssigkeit enthaltene Pektin vor der Zuführung zum Reifungsbehälter zumindest größtenteils wieder aus der Getränkeflüssigkeit entfernt wird.

2. Klärungsverfahren nach Anspruch 1, **dadurch gekennzeichnet, dass** die Beaufschlagung der Getränkeflüssigkeit mit den Gallotanninen vor der Beaufschlagung der Getränkeflüssigkeit mit dem pektinhaltigen Klärungsmittel erfolgt.

3. Klärungsverfahren nach Anspruch 2, **dadurch gekennzeichnet, dass** die Beaufschlagung der Getränkeflüssigkeit mit den Gallotanninen mindestens eine Minute vor der Beaufschlagung mit dem pektinhaltigen Klärungsmittel erfolgt.

4. Klärungsverfahren nach Anspruch 1, **dadurch gekennzeichnet, dass** zwischen der Beaufschlagung der Getränkeflüssigkeit mit dem pektinhaltigen Klärungsmittel und der Zuführung zum Reifungsbehälter in einem weiteren Verfahrensschritt eine Vorklärung der Getränkeflüssigkeit erfolgt.

5. Klärungsverfahren nach Anspruch 4, **dadurch gekennzeichnet, dass** die Vorklärung mittels eines Separators erfolgt.

6. Klärungsverfahren nach Anspruch 4 oder 5, **dadurch gekennzeichnet, dass** zwischen der Beaufschlagung der Getränkeflüssigkeit und der Vorklärung eine Kontaktzeit des pektinhaltigen Klärungsmittels mit der Getränkeflüssigkeit vorgesehen ist, die weniger als 24 Stunden, vorteilhafterweise weniger als 1 Stunde und insbesondere weniger als 10 min beträgt.

7. Klärungsverfahren nach einem der Ansprüche 1 bis 6, **dadurch gekennzeichnet, dass** in einem der Lagerung der Getränkeflüssigkeit im Reifungsbehälter nachfolgenden weiteren Verfahrensschritt eine Filtration der Getränkeflüssigkeit erfolgt.

8. Klärungsverfahren nach Anspruch 7, **dadurch gekennzeichnet, dass** bei der Filtration die betreffende Getränkeflüssigkeit aus einem oberen Drittel des gefüllten Reifungsbehältervolumens entnommen und einem Membran/Kieselgur-Filter zugeführt wird.

9. Klärungsverfahren nach einem der Ansprüche 1 bis 8, **dadurch gekennzeichnet, dass** das pektinhaltige Klärungsmittel eine Pektinmenge enthält, die 1 bis 200 ppm, vorzugsweise 20-100 ppm und insbesondere 30 bis 80 ppm bezogen auf die zu beaufschlagende Menge der Getränkeflüssigkeit beträgt.

10. Klärungsverfahren nach einem der Ansprüche 1 bis 9, **dadurch gekennzeichnet, dass** das pektinhaltige Klärungsmittel durch eine wässrige Lösung gebildet ist.

11. Klärungsverfahren nach Anspruch 10, **dadurch gekennzeichnet, dass** die wässrige Lösung wenigstens ein Puffermittel enthält.

12. Klärungsverfahren nach einem der Ansprüche 1 bis 11, **dadurch gekennzeichnet, dass** das pektinhaltige Klärungsmittel ein Pektin enthält, das aus der Gruppe von Pectino-floc / A, B, C entnommen ist.

13. Klärungsverfahren nach einem der Ansprüche 1 bis 12, **dadurch gekennzeichnet, dass** in einem der Beaufschlagung der Getränkeflüssigkeit mit dem pektinhaltigen Klärungsmittel vorausgehenden Verfahrensschritt ein Schnellverfahren zur Bestimmung eines für die jeweils zu beaufschlagende Getränkeflüssigkeit maximal geeigneten Pektins aus einer Gruppe von mehreren in Frage kommenden Pektinen für die Herstellung des pektinhaltigen Klärungsmittels durchgeführt wird.

14. Klärungsverfahren nach Anspruch 13, **dadurch gekennzeichnet, dass** bei dem Schnellverfahren jedes der in Frage kommenden Pektine jeweils in eine vorgegebene Menge der zu beaufschlagenden Getränkeflüssigkeit gegeben und mit dieser zentrifugiert wird, wobei in einem nachfolgenden Verfahrensschritt eine jeweilige Trübungsmessung der Getränkeflüssigkeit vorgenommen wird.

## Claims

1. Clarification method for a liquid beverage, in particular for producing beer,
wherein the liquid beverage, after passing through a fermentation stage, is subjected to a clarification which serves to remove active haze components from the liquid beverage, wherein the liquid beverage is charged with at least one pectin-containing clarification agent for increasing a filtration performance, and
the liquid beverage is fed to a maturation vessel, in which the liquid beverage is stored for a maturation time,
**characterised in that** the pectin-containing clarification agent is introduced into the liquid beverage on the path to the maturation vessel, wherein the liquid beverage is subjected to gallotannins in an additional method step,
and that the pectin contained in the liquid beverage is at least for the most part removed again from the liquid beverage before the feed to the maturation vessel.

2. Clarification method according to claim 1, **characterised in that** the subjecting, of the liquid beverage to the gallotannins takes place before the subjecting of the liquid beverage to the pectin-containing clarification agent.

3. Clarification method according to claim 2, **characterised in that** the subjecting of the liquid beverage to the gallotannins takes place at least one minute before the subjecting to the pectin-containing clarification agent. -

4. Clarification method according to claim 1, **characterised in that**, between the -subjecting of the liquid beverage to the pectin-containing clarification agent and the feed to the maturation vessel, a pre-clarification of the liquid beverage takes place in a further method step.

5. Clarification method according to claim 4, **characterised in that** the pre-clarification takes place by means of a separator.

6. Clarification method according to claim 4 or 5, **characterized in that**, between the subjecting of the liquid beverage and the pre-clarification, a contact time is provided for the pectin-containing clarification agent with the liquid beverage, which is less than 24 hours, advantageously less than one hour, and in particular less than 10 minutes.

7. Clarification method according to any one of claims 1 to 6, **characterised in that**, in a further method step following the storage of the liquid beverage in the maturation vessel, a filtration of the liquid beverage takes place.

8. Clarification method according to claim 7, **characterised in that**, during the filtration, the liquid beverage concerned is removed from an upper third of the filled maturation vessel volume and fed to a membrane/kieselguhr (diatomaceous earth) filter.

9. Clarification method according to any one of claims 1 to 8, **characterised in that** the pectin-containing clarification agent contains a quantity of pectin which amounts to 1 to 200 ppm, preferably 20-100 ppm, and in particular 30 to 80 ppm related to the amount to which the liquid beverage is subjected.

10. Clarification method according to any one of claims 1 to 9, **characterised in that** the pectin-containing agent is formed by an aqueous solution.

11. Clarification method according to claim 10, **characterised in that** the aqueous solution contains at least one buffer agent.

12. Clarification method according to any one of claims 1 to 11, **characterised in that** the pectin-containing clarification agent contains a pectin which is taken from the group of pectino-floc / A, B, C.

13. Clarification method according to any one of claims 1 to 12, **characterised in that**, in a method step preceding the subjecting of the liquid beverage to the pectin-containing clarification agent, a rapid process is carried out to determine the most suitable possible pectin for the liquid beverage to be subjected to, from a group of several pectins coming into consideration for producing the pectin-containing clarification agent.

14. Clarification method according to claim 13, **characterised in that**, during the rapid process, each of the pectins coming into consideration is added in a predetermined quantity to the liquid beverage, wherein, in a subsequent method step, a respective haze measurement of the liquid beverage is carried out in each case.

## Revendications

1. Procédé de clarification pour une boisson, en particulier pour la fabrication de bière,
lors duquel la boisson est soumise à une clarification après le passage d'une étape de fermentation, clarification servant à éliminer de la boisson des constituants participant à la turbidité, au moins un moyen de clarification contenant de la pectine étant injecté dans la boisson pour augmenter la capacité de filtration, et
la boisson est acheminée à un récipient de maturation, dans lequel la boisson est maintenue pendant un temps de maturation,
**caractérisé en ce que** l'agent de clarification contenant de la pectine est introduit dans la boisson sur le chemin entre l'étape de fermentation et le récipient de maturation, des gallotannins étant injectés dans la boisson dans une étape supplémentaire du procédé,
et **en ce que** la pectine contenue dans la boisson est au moins en majeure partie éliminée de la boisson avant l'acheminement au récipient de maturation.

2. Procédé de clarification selon la revendication 1, **caractérisé en ce que** l'injection de gallotannins dans la boisson s'effectue avant l'injection de l'agent de clarification contenant de la pectine dans la boisson.

3. Procédé de clarification selon la revendication 2, **caractérisé en ce que** l'injection de gallotannins dans la boisson s'effectue au moins une minute avant l'injection de l'agent de clarification contenant de la pectine.

4. Procédé de clarification selon la revendication 1, **caractérisé en ce que**, dans une autre étape du procédé, une pré-clarification de la boisson s'effectue entre l'injection de l'agent de clarification contenant de la pectine dans la boisson et l'acheminement au récipient de maturation.

5. Procédé de clarification selon la revendication 4, **caractérisé en ce que** la pré-clarification s'effectue au moyen d'un séparateur.

6. Procédé de clarification selon la revendication 4 ou 5, **caractérisé en ce qu'**il est prévu, entre l'injection dans la boisson et la pré-clarification, un temps de contact de l'agent de clarification contenant de la pectine avec la boisson, temps qui est inférieur à 24 heures, de préférence inférieur à une heure et en particulier inférieur à 10 min.

7. Procédé de clarification selon l'une des revendications 1 à 6, **caractérisé en ce qu'**une filtration de la boisson s'effectue dans une autre étape du procédé après le séjour de la boisson dans le récipient de maturation.

8. Procédé de clarification selon la revendication 7, **caractérisé en ce que** lors de la filtration la boisson considérée est prélevée d'un tiers supérieur du volume du récipient de maturation rempli et est amenée à un filtre à filtre à diatomées/ membrane.

9. Procédé de clarification selon l'une des revendications 1 à 8, **caractérisé en ce que** l'agent de clarification contenant de la pectine contient une quantité de pectine, qui est de 1 à 200 ppm, de préférence 20-100 ppm et en particulier de 30 à 80 ppm par rapport à la quantité de boisson recevant l'injection.

10. Procédé de clarification selon l'une des revendications 1 à 9, **caractérisé en ce que** l'agent de clarification contenant de la pectine est formé par une solution aqueuse.

11. Procédé de clarification selon la revendication 10, **caractérisé en ce que** la solution aqueuse contient au moins un agent tampon.

12. Procédé de clarification selon l'une des revendications 1 à 11, **caractérisé en ce que** l'agent de clarification contenant de la pectine contient une pectine qui est prise dans le groupe Pectino-floc / A, B, C.

13. Procédé de clarification selon l'une des revendications 1 à 12, **caractérisé en ce que**, dans une étape du procédé précédent l'injection de l'agent de clarification contenant de la pectine dans la boisson, un procédé rapide est mis en oeuvre pour déterminer parmi un groupe de plusieurs pectines proposées, la pectine la mieux appropriée pour la boisson dans laquelle doit avoir l'injection pour la fabrication de l'agent de clarification contenant de la pectine.

14. Procédé de clarification selon la revendication 13, **caractérisé en ce que**, lors du procédé rapide, chacune des pectines proposées est fournie à une quantité prédéterminée respective de la boisson dans laquelle doit avoir lieu l'injection, et centrifugée avec celle-ci, une mesure de la turbidité correspondante de la boisson étant effectuée dans une étape suivante du procédé.
